# EUROPÄISCHE PATENTSCHRIFT

(11) **EP 0 617 731 B1**
(45) Veröffentlichungstag und Bekanntmachung des Hinweises auf die Patenterteilung: **24.05.1995**
(21) Anmeldenummer: 93900038.6
(22) Anmeldetag: 12.12.1992
(51) Int. Cl.: C11B 5/00

(54) **N-ACYL-PHOSPHATIDYLETHANOLAMIN ALS OXIDATIONSSCHUTZMITTEL**
N-ACYL-PHOSPHATIDYLETHANOL AMINES AS ANTI-OXIDANTS
N-ACYL-PHOSPHATIDYLETHANOLAMINES UTILISEES COMME ANTIOXYDANTS

(30) Priorität: 18.12.1991 DE 4141842
(43) Veröffentlichungstag der Anmeldung: 05.10.1994
(73) Patentinhaber: RHONE-POULENC RORER GMBH, 50829 Köln (DE)
(72) Erfinder: GHYCZY, Miklos, D-5000 Köln 41 (DE)
(74) Vertreter: Döring, Wolfgang, Dr.-Ing. Patentanwälte Hauck, Graalfs, Wehnert, Döring, Siemons
(86) Internationale Anmeldenummer: EP9202882
(87) Internationale Veröffentlichungsnummer: WO9312213

(56) Entgegenhaltungen:
- EP-A- 0 237 880
- EP-A- 0 245 723
- DE-A- 2 756 866
- NL-A- 8 402 867
- PATENT ABSTRACTS OF JAPAN vol. 14, no. 443 (C-762)21. September 1991
- CHEMISTRY AND PHYSICS OF LIPIDS Bd. 42, 1986, IRELAND Seiten 249 - 260 J.L.NEWMAN ET AL. 'Phase behavior of synthetic N-acylethanolamine phospholipids'in der Anmeldung erw hnt
- A. Nasner, Fette-Seifen-Anstrichmittel 87(12) (1985), S. 477-481
- D.H. Hildebrand u.a., JAOCS 68(2) (1991), S. 119-122
- I.S. Bathia u.a., J. Sci. Fd. Agric. 29 (1978), S. 747-752
- J.-H. Lee u.a., Bull. Jap. Soc. Scientific Fisheries 47(7) (1981), S. 881-888
- M. Kashima u.a., JAOCS 68(2) (1991), S. 119-122
- J.-H. Lee u.a., Agric. Biol. Chem. 47(9) (1983), S. 2001-2007

## Beschreibung

Die vorliegende Erfindung betrifft die Verwendung von N-Acyl-Phosphatidylethanolamin als Oxidationsschutzmittel für ungesättigte Fettsäuren.

Ungesättigte Fettsäuren sind weit verbreitete Verbindungen. Sie können in freier Form oder chemisch gebunden, wie in Triglyceriden, Phospholipiden, Sphingolipiden, vorkommen. Sie sind weit verbreitet in der Natur und stellen wichtige Bestandteile der Ernährung dar. .An Glycerin gebunden, als Triglyceride, sind sie als Energiespeicher in Pflanzensamen vorhanden und werden hieraus als wichtiger Grundstoff für die menschliche und tierische Ernährung gewonnen. In den Phospholipiden sind die ungesättigten Fettsäuren an allen zellulären Membranen beteiligt. In freier Form dienen sie als Ausgangsprodukte für die biologische Synthese von in Lebewesen enthaltenen wichtigen Wirkstoffen, wie z.B. Prostaglandinen. Bei allen Arten des Vorkommens ist die chemisch unveränderte Form Voraussetzung zur Erfüllung der an die ungesättigten Fettsäuren gestellten Aufgabe.

Die schwerwiegendste Veränderung stellt die Anlagerung von Sauerstoff an die Doppelbindung der Fettsäure dar, mit der Folge der Peroxidbildung und einer radikalischen Kettenreaktion, die zur Spaltung der Fettsäuren führt. Diese Reaktionen können gewollt kontrolliert, aber auch unkontrolliert ablaufen. Beispiele für die kontrollierte Oxidation sind die Verbrennung von Nahrungs- und Futtermitteln als Energiequelle; die Immunabwehr gegen Bakterien und Parasiten; die Synthese von Mediatoren wie Prostaglandinen.

Die bei der unkontrollierten radikalischen Kettenreaktion gebildeten Radikale können nicht nur weiter mit Fettsäuren sondern auch mit Proteinen und Nucleinsäuren reagieren. Die Reaktionsprodukte führen zu pathologischen Veränderungen des Organismus.

Die unkontrollierte Oxidation wird von Antioxidantien verhindert, die entweder mit der Nahrung aufgenommen oder im Organismus synthetisiert werden. Fehlernährung, pathologische Veränderungen und der Alterungsprozeß können zu einem Mangel an Antioxidantien führen.

Die Oxidation von Nahrungsfetten ist stets unerwünscht und führt zu Substanzen, die toxikologisch bedenklich sind und die das Nahrungsmittel durch Geschmacksveränderung ungenießbar macht. Dieses läßt sich durch Antioxidantien und, soweit möglich, durch Ausschluß von Sauerstoff verhindern.

Aufgrund der weiten Verbreitung in verschiedenen biologischen Systemen und der großen Bedeutung ungesättigter Fettsäuren werden an die Eigenschaften von Antioxidantien zum Schutz der ungesättigten Fettsäuren vielfältige Anforderungen gestellt. Bis heute erfüllt keine der bekannten Antioxidantien die Mehrzahl dieser Anforderungen.

So sind die meistverwendeten natürlichen Antioxidantien das α-Tocopherol und die β-Carotine zwar ausgezeichnet wirksam, aber instabil in Gegenwart von Sauerstoff und Licht. Auch ist ihre Wärmestabilität, die bei der Anwendung in einigen Lebensmitteln, wie Ölen, wichtig ist, begrenzt.

Hinzu kommt noch, daß der Isolierungsprozeß oder die Synthese, aufwendig ist, was diese Produkte teuer machen.

Ascorbinsäure hat den Nachteil, daß sie in Ölen nicht löslich und deshalb nur in wässriger Umgebung wirksam ist, sodaß die Oxidation von Fettsäuren, die in der Fettphase zu finden sind, nur sehr begrenzt verhindert wird. Ein weiterer Nachteil ist, daß Ascorbinsäure in Kombination mit Eisensalzen ein Oxidationsmittel darstellen kann.

Weiterhin wurden sowohl synthetisch hergestellte als auch aus pflanzlichen und tierischen Fetten und Ölen extrahierte Phosphatide alleine und in Kombination mit Zusätzen auf ihre antioxidativen Eigenschaften bei der Autoxidation von Fetten und Ölen untersucht.

Die dabei erzielten Ergebnisse sind aber stark widersprüchlich.

So beschreibt A. Nasner in Fette, Seifen, Anstrichmittel 12 (1985), S. 477-481 die Untersuchung von rohem Sojalecithin und von seinen alkohollöslichen bzw. alkoholunlöslichen Fraktionen auf ihre antioxidative Wirkung bei Lagerungsversuchen mit Sonnenblumenöl und Schmalz. Dabei wurde gefunden, daß die antioxidative Wirkung von der jeweils verwendeten Lecithinfraktion abhängt. Die alkohollösliche Fraktion des Sojalecithins mit dem höchsten Anteil an Phosphatidylethanolamin zeigt dabei die beste Wirkung. Die Oxidationshemmung bei Schmalz mit einem α-Tocopherolgehalt von weniger als 10 ppm ist deutlich höher als bei Sonnenblumenöl, das 500 ppm α-Tocopherol enthält.

Nach Nasner kann somit ein Synergismus zwischen α-Tocopherol und den Phosphatiden ausgeschlossen werden, wohingegen die Phosphatide allein einen antioxidativen Effekt aufweisen.

Zu ähnlichen Ergebnissen kommt auch D.H. Hildebrand in JAOCS 61 (1984) S. 552 ff. bei der Untersuchung der antioxidativen Wirkung von Phosphatidylcholin, Phosphatidylinositol und Phosphatidylethanolamin. Dabei wird aufgezeigt, daß die Ölstabilität bei Zugabe der Phosphatide alleine und in Kombination mit α-Tocopherol zunimmt.

Es wird ein Synergismus zwischen den Phosphatiden und α-Tocopherol angenommen. Die beste Wirkung zeigt Phosphatidylethanolamin, was auch durch I.S. Bhatia et al. in JSci. Fd.Agric 79 (1978) 747 ff. bestätigt wird.

Andere Untersuchungen stehen diesen Untersuchungen entgegen. So beschreibt J.H. Lee et al. in Bulletin of the Japanese Society of Scientific Fisheries 47 (1981) 881-883 die antioxidative Wirkung von Lipiden des antarktischen Krills. Dabei wird α-Tocopherol als die aktive Substanz identifiziert, während den Phosphatiden nur ein synergetischer Effekt in Bezug auf die Verbesserung der Wirkung von α-Tocopherol zugeschrieben wird.

J.H. Lee et al. in Agric. Biol. Chem. 47 (9) (1983) S. 2001ff. stellen in ihren Untersuchungen der antioxidativen Wirkung von Phosphatidfraktionen aus Krill, Eigelb und Sojabohnen fest, daß diese Phosphatide keine antioxidative Wirkung zeigen, aber die Zersetzung der durch Oxidation gebildeten Peroxide aktivieren.

M. Kashima et al. in JAOCS 68 (1991) 119f. verneinen ebenfalls die antioxidative Wirkung von Phosphatiden wie Phosphatidylcholin, Phosphatidylethanolamin und Phosphatidylserin. Hierbei wird die antioxidative Wirkung dieser Phosphatide auf tocopherolfreies und tocopherolangereichertes Perilaöl untersucht. Dabei konnte festgestellt werden, daß die oxidative Stabilität des tocopherolfreien Perilaöls durch die Zugabe der Phosphatide nicht verbessert wird, während die Oxidation des tocopherolangereicherten Perilaöls durch Zugabe von Phosphatidylethanolamin und Phosphatidylaminserin stark unterdrückt worden ist. Dies bestätigt vorhergehende Ergebnisse, wonach Phosphatide allein keine antioxidative Wirkung zeigen, sondern lediglich aufgrund eines Synergismuses die antioxidative Wirkung von α-Tocopherol verstärken.

Andere natürliche Antioxidantien sind Pflanzenextrakte, wie z.B. Estrakte aus Rosmarin. Die Nachteile dieser Produkte sind die naturbedingten Schwankungen in der Zusammensetzung. Sie sind oft gefärbt, haben einen störenden Geschmack und Geruch und sind umständlich zu gewinnen.

Die nicht natürlichen Antioxidantien, wie BHA, BHT, TBHQ sowie Propylgallat, enthalten alle eine sterisch gehinderte Phenolgruppe und sind somit wie alle Phenole in biologischen Systemen reaktionsfähig. Untersuchungen in den letzten Jahren haben jedoch gezeigt, daß BHA bei bestimmten Konzentrationen bei unterschiedlichen Tieren Krebs erzeugen kann. Als Folge ist eine Kennzeichnungspflicht für BHA-haltige Lebensmittel mit dem Wortlaut "BHA kann Krebs erzeugen, außer wenn bestimmte Konzentrationen eingehalten werden", in einigen Ländern eingeführt worden. Hinzu kommt noch, daß das steigende Umweltbewußtsein der Bevölkerung immer weniger nicht natürliche Produkte in Lebensmitteln akzeptiert.

Aus der NL 84 02 867 A ist ein Oxidationsschutzsystem für Lipide bekannt, das aus einem polaren Lipid besteht, welches seinerseits ein lipophiles und/oder amphiphiles Antioxidationsmittel enthält. Dieses Antioxidationsmittel ist beispielsweise Tocopherol, während als polare Lipide auch acetylierte Derivate von Phospholipiden eingesetzt werden. Eindeutig ist dieser Offenlegungsschrift zu entnehmen, daß das eigentliche Antioxidationsmittel das dort aufgeführte alpha-Tocopherol ist, während das polare Lipid zwar die Wirkung dieses Antioxidationsmittel erhöht, selbst jedoch nicht antioxidativ wirkt. Vielmehr konzentriert das in der NL 84 02 867 A aufgeführte polare Lipid das Antioxidationsmittel auf eine für seine Wirkung günstige Stelle.

Die Aufgabe der vorliegenden Erfindung ist es, einen Stoff zur Verfügung zu stellen, der die oxidative Zersetzung von ungesättigten Fettsäuren in freier oder gebundener Form verhindert oder zumindest stark einschränkt und dabei die Nachteile der bisher verwendeten bekannten Antioxidantien vermeidet.

Diese Aufgabe wird durch die Verwendung von N-Acyl-Phosphatidylethanolamine als Oxidationsschutzmittel für Produkte, die ungesättigte Fettsäuren und deren Derivate enthalten, gelöst.

N-Acyl-phosphatidylethanolamine sind bekannte Verbindungen, deren Vorkommen in der Natur eingehend von J.L. Newmann in Chem. Phys. Lipids 42 (1986), S. 249f untersucht worden ist. Diese Substanzgruppe wurde in Mikroorganismen, Pflanzen, Geweben von Wirbeltieren, wie z.B. Herzmuskel oder Epidermis, sowie in Amöben und Pflanzenkeimlingen nachgewiesen.

Es wurde überraschenderweise, vor allem in Hinblick auf die zuvor wiedergegebenen widersprüchlichen Ergebnisse der Untersuchungen von verwandten Verbindungen zu ihrer antioxidativen Wirkung, gefunden, daß N-Acyl-Phosphatidylethanolamine ungesättigte Fettsäuren in freier sowie in gebundener Form vor der oxidativen Zersetzung schützen.

Die N-Acyl-Phosphatidylethanolamine weisen zudem mehrere Vorteile gegenüber den bisher eingesetzten Antioxidantien auf:
- Diese Verbindungen kommen in menschlichen, tierischen und pflanzlichen Organismen vor und sind toxikologisch unbedenklich.
- Sie bilden Grenzflächen in Form von Doppelmembranen anolog zu biologischen Membranen und sind sowohl Wasser dispergierbar als auch fettlöslich.
- Ihre Beständigkeit ist in Gegenwart von Sauerstoffen und Licht gegenüber α-Tocopherol erhöht.

Die erfindungsgemäß zu verwendenden N-Acyl-Phosphatidylethanolamine können gemäß DE-A-27 56 866 einfach durch Reaktion von Phosphatidylethanolamin mit Säurechloriden oder Säureanhydriden hergestellt werden.

Chemisch reines Phosphatidylethanolamin kann aus alkoholunlöslichen Sojalecithinfraktionen, die üblicherweise reich an Phosphatidylethanolamin sind, isoliert werden. Präparative chromatographische Trennmethoden erlauben die Gewinnung reiner Produkte für die Umsetzung mit Säurechloriden.

Bezüglich der Konzentration an N-Acyl-Phosphatidylethanolamin bei der erfindungsgemäßen Verwendung ist festzuhalten, daß diese Konzentration vorzugsweise zwischen 0,01 Gew.% bis 5 Gew.%, jeweils bezogen auf die Menge des zu schützenden Produktes, variiert.

Der Acylrest in dem N-Acyl-Phosphatidylethanolaminen repräsentiert vorzugsweise einen natürlichen Fettsäurerest oder eine Mischung von natürlichen Fettsäurenresten. Insbesondere handelt es sich bei diesem Acylrest um einen Acetyl- oder einen Oleyl-Rest.

Das durch die erfindungsgemäße Verwendung von N-Acyl-Phosphatidylethanolaminen zu schützende Produkt kann sowohl in wäßriger Phase als auch in einer Ölphase vorliegen.

Insbesondere kann das zu schützende Produkt bei der erfindungsgemäßen Verwendung von N-Acyl-Phosphatidylethanolaminen freie Fettsäuren, Phospholipide und/oder Fettsäuretriglyceride enthalten.

Die erfindungsgemäße Verwendung wird nachfolgend anhand von Ausführungsbeispielen näher erläutert.

### Nachweise der Wirksamkeit der N-Acyl-phosphatidylethanolamine

Die oxidative Zersetzung von Verbindungen, die ungesättigte Fettsäuren enthalten, verläuft nach unterschiedlichen Reaktionsmechanismen, wobei die Oxidationsmittel verschieden sein können. Um die Wirksamkeit der N-Acyl-phosphatidylethanolamine nachzuweisen, wurden Soja-N-Acyl-phosphatidylethanolamin (NACPE), Soja-N-Acetyl-phosphatidylethanolamin (NATPE), Soja-N-Oleoyl-phosphatidylethanolamin (NOLPE) in vier unterschiedlichen Systemen getestet.

### Beispiel 1

### Synthese von NOLPE

100 g chemisch reines Phosphatidylethanolamin, hergestellt durch säulenchromatographische Trennung einer phosphatidylethanolaminreichen alkoholunlöslichen Sojolecithinfraktion auf Kieselgel mit Chloroform-Methanol als Elutionsmittel, werden in 500 ml Toluol gelöst und nach Zugabe von 38 ml Triethylamin unter Rühren mit einer Lösung von 41,2 g Ölsäurechlorid in 60 ml Toluol versetzt. Nach einstündigem Rühren bei Raumtemperatur wird das ausgefallene Triethylaminhydrochlorid abfiltriert. Das Lösungsmittel wird im Vakuum bei 60°C Badtemperatur in einer Stickstoffatmosphere entfernt. N-Oleoyl-Phosphatidylethanolamin bleibt als viskoses braunes Öl zurück. Ausbeute 115 g = 96 % der Theorie.

### Synthese von NATPE

Die Synthese von NATPE wird in analoger Weise durch Umsetzung von 100 g chemisch reinem Phosphatidylethanolamin mit 14 g Acetanhydrid durchgeführt. Ausbeute 100,1 g = 97 %.

### Synthese von NACPE

Die Synthese von NACPE wird in analoger Weise durch Umsetzung von chemisch reinem Phosphatidylethanolamin mit Gemischen von Fettsäurechloriden, die durch Chlorierung von Fettsäuregemischen aus Sojabohnen, Palmöl oder Sonnenblumenöl hergestellt werden, durchgeführt.

### Oxidationsmittel 1: Cumolhydroperoxid (CHP) [A. Sevanian in Lipid Peroxidation (1988) S.84-99]

Arbeitsvorschrift 1:
100 »mol/l Cumolhydroperoxid
40 »mol/l FeCl₂ als Oxidationsmittel und
100 »g Substrat (z.B. Linolensäure)
werden in 2,5 ml Wasser mit 10 mmol/l Trispuffer bei pH 7,4 gelöst.

Die erfindungsgemäß zu verwendenden Substanzen wurden in steigenden Konzentrationen von 0,01 bis 5 Gewichtsprozent bezogen auf das Substrat zugegeben.

Die Kontrollprobe enthält keine Zusätze. Nach einer Inkubationszeit von 1 Stunden bei 37°C wurde die durch oxidative Zersetzung eintretende Veränderung gemessen.
Arbeitsvorschrift 2:
1 g Pflanzenöl
100 »l Cumolhydroperoxid (184 »l in 10 ml Ethanol)
10 »l FeCl₂ (0,2 mmol/ml)
werden 1 Stunde bei 37°C inkubiert.

Dieses System ist das meistverwendete Modell, um radikalische Oxidationen, die unter Kettenreaktion ablaufen, unter kontrollierten Bedingungen in vitro messen zu können.

### Oxidationsmittel 2: UVA-Strahlung [K.J. Denis, T.Shibamoto; Lipids 25 (1990) 460-464]

- Quelle:: Leuchtstofflampe Philips TL/10
- Bestrahlungszeit:: 1 Stunde
- Menge:: 100»g Substrat

Das Substrat und das erfindungsgemäße Antioxidants werden in 2 ml Wasser unter Bildung von Mizellen bei Fettsäuren und unter Bildung von Liposomen bei Phospholipiden dispergiert. Anschließend wird die Probe bestrahlt.

Dieses Oxidationsmittel ist das Modell für die lichtinduzierten radikalischen Reaktionen.

### Oxidationsmittel 3: Lipoxygenase (LOG) [H. Aochima; Anal. Biochem. 25 (1978) 49-55]

Reaktionssatz enthält in 3 ml
0,1 mol/l K₃BO₃ -Puffer pH 8,0:
1500 U/ml Sojalipoxidase Type I (Sigma)
100 »g Substrat
Inkubationsdauer: 1 Stunden bei 37°C
Diese Reaktion ermöglicht, die enzymatisch induzierte Peroxidbildung unter kontrollierten Bedingungen auszuwerten

### Oxidationsmittel 4: Superoxid (SPO) [T.C. Pederson, S.D. Aust; Ciochem. Biophys, Res Comm 52 (1973) 1071-1078; M. Tien, B.A. Svingen, S.D. Aust; Federation Proceedings 40 (1981) 179-182]

Arbeitsvorschrift:
0,33 mmol/l Xanthin
0,10 IE Xanthinoxidase
0,10 mmol/l FeCl₃
0,11 mmol/l EDTA
0,20 mmol/l ADP
100 »g Substrat
werden in 0,3 mmol/l NaCl-Lösung suspendiert und 1 Stunde bei 37°C inkubiert.

Mit Hilfe dieses Oxidationssystems können Antioxidantien in vitro getestet werden, deren Wirkung auf die Peroxidation in der Atmungskette der Zellen angenommen wird.

Die Arfindungsgemäß zu verwendenden Substanzen werden mit folgenden Konzentrationen in Gewichtsprozent, bezogen auf das Substrat, zugegeben:
0 % (Kontrolle), 0,01 %; 0,05 %; 0,1 %, 0,5 %; 1 %, 5 %
Nach Beendigung der Inkubation wird der Grad der oxidativen Zersetzung nach folgenden Kriterien quantifiziert:
> Abnahme der Linolensäurekonzentration (Nachweismethode 1)
< Zunahme des Malondialdehyd als Hauptzersetzungsprodukt der Linolensäure (Nachweismethode 2)

### Nachweismethode 1:

### Gaschromatographische Bestimmung der Veränderung der Substratkonzentration

Der Nachweis der Peroxidbildung erfolgt indirekt durch Bestimmung des Verlustes an Linolensäure. Zur Korrektur von Aufarbeitungsverlusten wird Palmitinsäure der Lösung, in der die Peroxidbildung erfaßt werden soll, zugesetzt und der Quotient aus Palmitinsäure/γ-linolensäure bestimmt.

Gaschromatographische Bedingungen:
- Säule:: DB-225, 25m; 150-220 °C; 3°/min
- Detektor:: FID
- Trägergas:: Wasserstoff
Zur gaschromatographischen Analyse wurden die Fettsäuren mit Bortrifluorid in die Methylester überführt.

### Nachweismethode 2: [V.C. Tatam, C. C. Chongchit, C.K. Chow; Lipids 25 (1990) 226-229; St. H.Y. Wong et al.; Clin. Chem. 33 (1987) 214-220; J.A. Knight et al.; Clin. Chem. 34 (1988) 1197-1110]

### Malondialdehyd-Bestimmung

Bildung von Malondialdehyd:
0,1 - 0,5 ml des jeweiligen Resaktionsansatzes
+ 0,5 ml Thiobarbitursäurereagenz
(2 Teile 0,4 % TBA in 0,2 N HCl + 1 Teil Wasser)
+ 0,07 ml 0,2 % BHT in Ethanol werden miteinander versetzt und
anschließend 45 Min im Wasserbad bei 90°C erwärmt. Danach erfolgt eine Extraktion des TBA-MDA-Adduktes mit Isobutanol Der Isobutanol-Extrakt wird anschließend mit Methanol vermischt (2:1) und der hochdruckflüssigkeitschromatographischen Analyse (HPLC) unterworfen.

HPLC-Trennung:
- Eluent:: Methanol/Wasser 1:1 0,05 % Tetrabutylammoniumhydrogensulfat
- Säule:: Lichrospher 100 RP-18 5 »m 125 x 4 mm
- Detektion:: Fluoreszenz EX 515 nm Em: 550 nm
- Flußrate:: 1 ml/min
Ermittlung der Standardkurve mit 1,1,3,3-Tetrahydroxypropan.

Die Ergebnisse anhand derer die antioxidative Wirkung der erfindungsgemäßen Verwendung von N-Acyl-phosphatidylethanolaminen nachgewiesen wird, sind in Tabellen 1 bis 7 zusammengefaßt.

Als Vergleich zu der Wirksamkeit der erfindungsgemäß verwendeten Substanzen wurden Versuche mit Tocopherol (Vitamin A) durchgeführt. Auch diese Ergebnisse sind tabellarisch in den Tabellen 8-11 zusammengefaßt.

Die Werte in den Tabellen geben die Absolutwerte, gemessen mit der jeweiligen Methode, sowie den prozentualen Wert an, wobei der Wert für die Kontrolle, die keinen Zusatz an Antioxidant enthält, als 100 % angenommen wurde.

### Benutzte Abkürzungen:

| | | |
|---|---|---|
| 1. | Soja-N-Acyl-phosphatidylethanolamin | NACPE |
| 2. | Soja-N-Acetyl-phosphatidylethanolamin | NATPE |
| 3. | Soja-N-Oleoyl-phosphatidylethanolamin | NOLPE |
| 4. | Cumolhydroperoxid | CHP |
| 5. | UVA-Strahlung | UVA |
| 6. | Lipogenase | LOG |
| 7. | Superoxyd | SPO |
| 8. | d,1-Tocopherol | TOC |
| 9. | gamma-Linolensäure | GLA |
| 10. | Soja-Phosphatidylcholin | SPC |
| 11. | Rinderhirn-Phosphatidylethanolamin | HPE |
| 12. | Triglycerid aus der Nachtkerze | TRG |

**Tabelle 1**

| NACPE-Konzentration Gew.-% | Substrat Oxidationsmittel Methode: | GLA LOG 1 |
|---|---|---|
| | absolut | in % |
| 0 | 2,9 | 100 |
| 0,01 | 0,7 | 24 |
| 0,05 | 0,8 | 28 |
| 0,1 | 0,6 | 21 |
| 0,5 | 0,6 | 21 |
| 1 | 0,7 | 24 |
| 5 | 0,8 | 28 |

**Tabelle 2**

| NATPE-Konzentration Gew.-% | Substrat Oxidationsmittel Methode: | GLA UVA 1 |
|---|---|---|
| | absolut | in % |
| 0 | 3,2 | 100 |
| 0,01 | 0,4 | 13 |
| 0,05 | 0,4 | 13 |
| 0,1 | 0,5 | 16 |
| 0,5 | 0,5 | 16 |
| 1 | 0,4 | 13 |
| 5 | 0,5 | 16 |

**Tabelle 3**

| NOLPE-Konzentration Gew.-% | Substrat Oxidationsmittel Methode: | GLA CHP 2 |
|---|---|---|
| | absolut | in % |
| 0 | 3,6 | 100 |
| 0,01 | 1,2 | 33 |
| 0,05 | 1,3 | 36 |
| 0,1 | 1,1 | 31 |
| 0,5 | 1,1 | 31 |
| 1 | 1,2 | 33 |
| 5 | 1,2 | 33 |

**Tabelle 4**

| NATPE-Konzentration Gew.-% | Substrat Oxidationsmittel Methode: | SPC CHP 1 |
|---|---|---|
| | absolut | in % |
| 0 | 2,4 | 100 |
| 0,01 | 1,0 | 41 |
| 0,05 | 0,9 | 38 |
| 0,1 | 0,8 | 33 |
| 0,5 | 0,7 | 29 |
| 1 | 0,8 | 33 |
| 5 | 0,8 | 33 |

**Tabelle 5**

| NOLPE-Konzentration Gew.-% | Substrat Oxidationsmittel Methode: | HPE CHP 2 |
|---|---|---|
| | absolut | in % |
| 0 | 2,0 | 100 |
| 0,01 | 0,8 | 40 |
| 0,05 | 0,8 | 40 |
| 0,1 | 0,8 | 40 |
| 0,5 | 0,8 | 40 |
| 1 | 0,9 | 45 |
| 5 | 0,9 | 45 |

**Tabelle 6**

| NACPE-Konzentration Gew.-% | Substrat Oxidationsmittel Methode: | HPE CHP 2 |
|---|---|---|
| | absolut | in % |
| 0 | 2,8 | 100 |
| 0,01 | 1,4 | 50 |
| 0,05 | 1,3 | 40 |
| 0,1 | 1,2 | 40 |
| 0,5 | 0,9 | 40 |
| 1 | 1,3 | 45 |
| 5 | 1,6 | 45 |

**Tabelle 7**

| NATPE-Konzentration Gew.-% | Substrat Oxidationsmittel Methode: | HPE CHP 2 |
|---|---|---|
| | absolut | in % |
| 0 | 2,4 | 100 |
| 0,01 | 1,9 | 79 |
| 0,05 | 1,7 | 71 |
| 0,1 | 1,2 | 50 |
| 0,5 | 1,3 | 54 |
| 1 | 1,4 | 58 |
| 5 | 1,8 | 75 |

Die folgenden Versuche wurden als Vergleiche mit d,1-Tocopherol durchgeführt:

**Tabelle 8**

| TOC-Konzentration Gew.-% | Substrat Oxidationsmittel Methode: | GLA CHP 2 |
|---|---|---|
| | absolut | in % |
| 0 | 3,6 | 100 |
| 0,01 | 1,0 | 28 |
| 0,05 | 0,8 | 22 |
| 0,1 | 0,6 | 17 |
| 0,5 | 0,7 | 19 |
| 1 | 0,7 | 19 |
| 5 | 0,7 | 19 |

**Tabelle 9**

| TOC-Konzentration Gew.-% | Substrat Oxidationsmittel Methode: | GLA LOG 1 |
|---|---|---|
| | absolut | in % |
| 0 | 2,9 | 100 |
| 0,01 | 0,6 | 21 |
| 0,05 | 0,6 | 21 |
| 0,1 | 0,5 | 17 |
| 0,5 | 0,5 | 17 |
| 1 | 0,7 | 24 |
| 5 | 0,6 | 21 |

**Tabelle 10**

| TOC-Konzentration Gew.-% | Substrat Oxidationsmittel Methode: | HPE CHP 1 |
|---|---|---|
| | absolut | in % |
| 0 | 2,4 | 100 |
| 0,01 | 0,8 | 33 |
| 0,05 | 0,7 | 30 |
| 0,1 | 0,7 | 30 |
| 0,5 | 0,7 | 30 |
| 1 | 0,8 | 33 |
| 5 | 0,7 | 30 |

**Tabelle 11**

| TOC-Konzentration Gew.-% | Substrat Oxidationsmittel Methode: | TRG CHP 2 |
|---|---|---|
| | absolut | in % |
| 0 | 2,4 | 100 |
| 0,01 | 1,3 | 54 |
| 0,05 | 1,0 | 42 |
| 0,1 | 1,0 | 42 |
| 0,5 | 0,7 | 29 |
| 1 | 0,8 | 33 |
| 5 | 0,8 | 33 |

## Patentansprüche

1. Verwendung von N-Acyl-Phosphatidylethanolaminen als Oxidationsschutzmittel für Produkte, die ungesättigte Fettsäuren und deren Derivate enthalten.

2. Verwendung nach Anspruch 1, wobei N-Acyl-Phosphatidylethanolamin in einer Menge von 0,01 bis 5 Gewichtsprozent, bezogen auf die Menge des zu schützenden Produktes, verwendet werden.

3. Verwendung nach Anspruch 1, wobei der Acylrest bei der allgemeinen Bezeichnung der N-Acyl-Phosphatidylethanolamins einen natürlichen Fettsäurerest oder eine Mischung von natürlichen Fettsäureresten darstellt.

4. Verwendung nach Anspruch 1, wobei N-Acetyl-phosphatidylethanolamin verwendet wird.

5. Verwendung nach Anspruch 1, wobei N-Oleoyl-phosphatidylethanolamin verwendet wird.

6. Verwendung nach einem der Ansprüche 1 bis 5, wobei das zu schützende Produkt in wässriger Phase vorliegt.

7. Verwendung nach einem der Ansprüche 1 bis 5, wobei das zu schützende Produkt in einer Ölphase vorliegt.

8. Verwendung nach einem der Ansprüche 1 bis 7, wobei das zu schützende Produkt freie Fettsäuren enthält.

9. Verwendung nach einem der Ansprüche 1 bis 7, wobei das zu schützende Produkt Phospholipide enthält.

10. Verwendung nach einem der Ansprüche 1 bis 7, wobei das zu schützende Produkt Fettsäuretriglyceride enthält.

## Claims

1. Use of N-acylphosphatidylethanolamines as anti-oxidant for products containing unsaturated fatty acids and their derivatives.

2. The use according to claim 1, wherein N-acylphosphatidylethanolamine is used in an amount of 0,01 to 5 % by weight relative to the amount of the product to be protected.

3. The use according to claim 1, wherein the acyl group in the general formula of the N-acylphosphatidylethanolamines represents a natural fatty acid moiety or a mixture of natural fatty acid moieties.

4. The use according to claim 1, wherein N-acetylphosphatidylethanolamine is used.

5. The use according to claim 1, wherein N-oleoylphosphatidylethanolamine is used.

6. The use according to one of the claims 1 to 5, wherein the product to be protected is present in an aqueous phase.

7. The use according to one of the claims 1 to 5, wherein the product to be protected is present in an oil phase.

8. The use according to one of the claims 1 to 7, wherein the product to be protected comprises free fatty acids.

9. The use according to one of the claims 1 to 7, wherein the product to be protected comprises phospholipids.

10. The use according to one of the claims 1 to 7, wherein the product to be protected comprises fatty acid triglycerides.

## Revendications

1. Utilisation de N-acyl-phosphatidyléthanolamines à titre d'agents de protection vis-à-vis de l'oxydation pour des produits qui contiennent des acides gras et leurs dérivés.

2. Utilisation suivant la revendication 1, caractérisée en ce que l'on utilise la N-acyl-phosphatidyléthanolamine en une proportion de 0,01 à 5% en poids, par rapport à la quantité du produit à protéger.

3. Utilisation suivant la revendication 1, caractérisée en ce que le reste acyle dans la définition générale de la N-acyl-phosphatidyléthanolamine désigne un reste d'acide gras naturel, ou un mélange de restes d'acides gras naturels.

4. Utilisation suivant la revendication 1, caractérisée en ce que l'on utilise la N-acétyl-phosphatidyléthanolamine.

5. Utilisation suivant la revendication 1, caractérisée en ce que l'on utilise la N-oléyl-phosphatidyléthanolamine.

6. Utilisation suivant l'une quelconque des revendications 1 à 5, caractérisée en ce que le produit à protéger se présente sous forme de phase aqueuse.

7. Utilisation suivant l'une quelconque des revendications 1 à 5, caractérisée en ce que le produit à protéger se présente sous la forme d'une phase huileuse.

8. Utilisation suivant l'une quelconque des revendications 1 à 7, caractérisée en ce que le produit à protéger contient des acides gras libres.

9. Utilisation suivant l'une quelconque des revendications 1 à 7, caractérisée en ce que le produit à protéger contient des phospholipides.

10. Utilisation suivant l'une quelconque des revendications 1 à 7, caractérisée en ce que le produit à protéger contient des triglycérides d'acides gras.
